Europäisches Patentamt

European Patent Office

Office européen des brevets

(19)

(11) Numéro de publication: **0 071 499**
**B1**

(12) **FASCICULE DE BREVET EUROPEEN**

(45) Date de publication du fascicule du brevet:
**25.09.85**

(51) Int. Cl.⁴: **B 60 N 1/06**

(21) Numéro de dépôt: **82401287.6**

(22) Date de dépôt: **08.07.82**

(54) **Dispositif de réglage en hauteur d'un siège de véhicule.**

(30) Priorité: **17.07.81 FR 8113991**
**24.06.82 FR 8211064**

(43) Date de publication de la demande:
**09.02.83 Bulletin 83/6**

(45) Mention de la délivrance du brevet:
**25.09.85 Bulletin 85/39**

(84) Etats contractants désignés:
**AT BE CH DE GB IT LI LU NL SE**

(56) Documents cités:
**DE - B - 2 265 374**
**FR - A - 2 191 702**
**FR - A - 2 419 837**
**GB - A - 958 691**
**US - A - 2 227 764**
**US - A - 4 209 158**

(73) Titulaire: **TUBAUTO Société dite:, 6, rue Paul-Vaillant Couturier, F-92307 Levallois-Perret (FR)**

(72) Inventeur: **Janiaud, André, 82, rue Lauriston, F-75116 Paris (FR)**

(74) Mandataire: **Madeuf, Claude Alexandre Jean et al, CABINET MADEUF 3, avenue Bugeaud, F-75116 Paris (FR)**

ACTORUM AG

## Description

La présente invention a pour objet un dispositif permettant le réglage en hauteur notamment de la partie arrière d'un siège de véhicule qui est d'une réalisation simple et qui peut s'adapter sur un siège classique ne comportant pas de réglage en hauteur de la partie arrière ni de dispositif permettant le réglage en hauteur de la partie avant du siège. Cet ensemble est monté directement sur la partie supérieure mobile des glissières permettant le réglage d'avant en arrière et d'arrière en avant du siège.

En utilisant ce dispositif qui peut être adapté sur les deux sièges avant ou seulement sur le siège du conducteur, on peut rendre très confortable la position soit de l'utilisateur soit du conducteur pendant les voyages en lui évitant ainsi une trop grande fatigue. En raison de sa conception, ce dispositif étant peu encombrant peut être aisément monté dans des véhicules modernes de petite dimension et dont l'habitacle a été réduit au minimum afin de limiter la puissance du moteur et en conséquence la dépense d'énergie.

On connaît déjà un dispositif (FR-A-2 419 837) permettant d'obtenir le soulèvement de l'arrière du siège monté sur glissière, par désaccouplement temporaire de deux secteurs dentés complémentaires en regard, dont l'un est déplacé, contre l'action d'un ressort, à partir d'un levier de commande, au moyen de pièces et leviers intermédiaires de transmission et de transformation de mouvements.

En outre, le brevet FR précité décrit un autre dispositif de réglage de l'avant et de l'arrière du siège, au moyen de pièces pivotantes munies de dentures en regard, soumises à l'action de cames commandées à partir d'une poignée et rappelées plus ou moins directement par un ressort, pour bloquer les secteurs dentés ou les désolidariser temporairement à volonté, en vue du réglage en hauteur de la partie requise du siège.

La présente invention a pour but de proposer deux autres dispositifs de réglage du type ci-dessus, mais de structure plus simple et moins encombrante, permettant en outre de réaliser le soulèvement automatique de l'arrière du siège, dès que les secteurs dentés complémentaires sont désolidarisés.

Par rapport au FR-A-2 419 837 qui décrit déjà un dispositif de réglage en hauteur de la partie arrière d'un siège de véhicule, comporte une pièce en L qui est fixée sur la partie supérieure mobile de chaque glissière du siège puis la partie verticale de cette pièce en L sert de support à une pièce portant un secteur arrière présentant des dents qui sont destinées à coopérer avec une pièce triangulaire pivotante montée sur un axe, cette pièce triangulaire étant munie à sa partie arrière d'une denture engrenant avec les dents prémentionnées, selon une première réalisation, l'invention est caractérisée en ce que lorsque la pièce qui est rendu coulissante est tirée vers l'avant du siège, tandis que, sous l'action d'un organe se déplaçant dans une boutonnière, la denture se dégage des dents, un axe placé à l'extrémité d'une pièce de support portant l'armature du siège peut se déplacer verticalement dans des boutonnières de forme appropriée percées dans les pièces, ce mouvement étant provoqué d'une manière automatique d'une part, du fait du montage sur un axe du support et, d'autre part, par l'action d'un vérin qui fait pivoter la pièce triangulaire dont l'extrémité arrière est solidaire de l'axe prémentionné; le mouvement de retour de la pièce en triangle isocèle qui porte un ergot étant obtenu sous l'action d'un ressort de rappel.

Suivant une autre caractéristique de l'invention, un levier de commande pivotant permet de transmettre un mouvement pivotant à la pièce en triangle isocèle portant l'ergot prémentionné, ce mouvement étant contrarié par le ressort de rappel fixé par l'une de ses extrémités, d'une part, sur une tringle de transmission de mouvement et, d'autre part, sur l'axe porté par le support sur lequel est fixée l'armature du siège.

Par rapport au FR-A-2 419 837 qui décrit en outre un dispositif de réglage en hauteur de la partie avant et arrière d'un siège de véhicule dans lequel la partie supérieure coulissante de chaque glissière d'un siège comporte une pièce en L maintenant, à ses deux extrémités, des pièces conformées à partir desquelles sont réglées en hauteur la partie arrière et la partie avant de l'assise puis des pièces pouvant pivoter légèrement sont terminées par des dentures coopérant avec les dentures de pièces pour déterminer la hauter de la partie arrière et avant de l'assise du siège et bloquer cette assise dans la position choisie, ces pièces pivotantes sont soumises à l'action de cames commandées par une poignée pouvant faire pivoter un arbre portant à son extrémité libre un bras muni d'un doigt appuyant tour à tour sur l'une des cames tandis qu'au moins un ressort tend à ramener les cames en position de repos, c'est-à-dire dans la position de blocage des pièces par engrènement des dents dans la denture des pièces après passage par un point mort, selon une deuxième réalisation, l'invention est caractérisée en ce qu'un levier coopérant avec la pièce pivotante permet, sous l'action d'un ressort, le soulèvement automatique de la partie arrière de l'assise du siège.

Diverses autres caractéristiques de l'invention ressortent d'ailleurs de la description détaillée qui suit.

Une forme de réalisation de l'objet de l'invention est représentée, à titre d'exemple, aux dessins annexés.

La fig. 1 est une élévation latérale, partie en coupe, du dispositif monté sur un siège.

La fig. 2 est un demi-plan correspondant à la fig. 1.

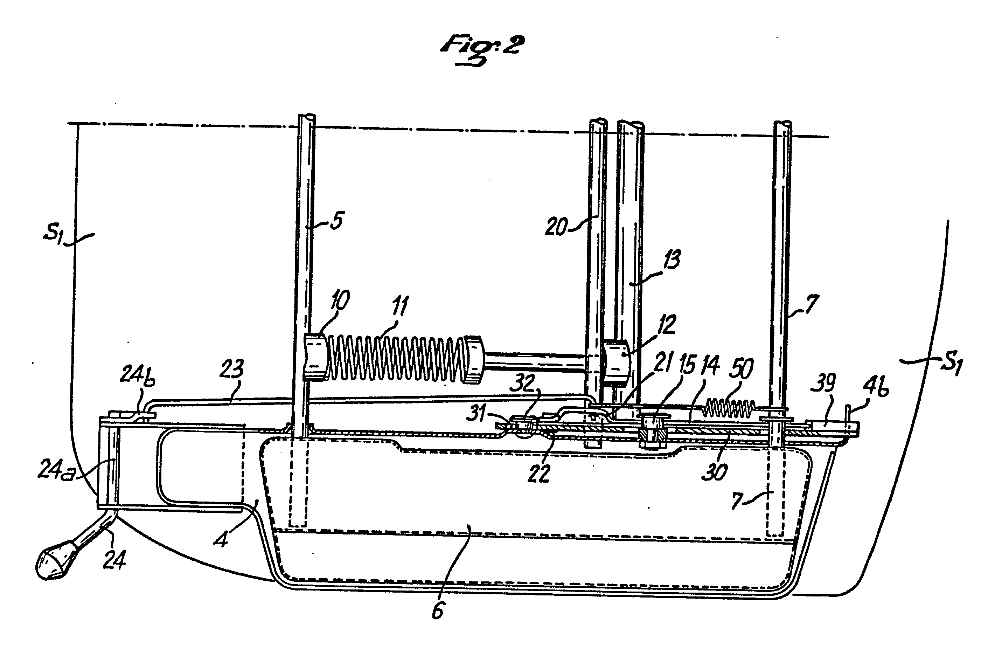

La fig. 3 est une coupe suivant la ligne III-III de la fig. 1.

La fig. 4 est une coupe suivant la ligne IV-IV de la fig. 1.

La fig. 5 est une élévation latérale de la partie gauche du dispositif qui est identique sur l'autre côté droit du siège.

La fig. 5a est une élévation latérale à grande échelle de la partie centrale de la fig. 5.

La fig. 6 est un plan du dispositif partiel en coupe.

La fig. 7 est un est un plan partiel du dispositif.

La fig. 8 est une coupe suivant la ligne VIII-VIII de la fig. 5.

La fig. 9 est une coupe suivant la ligne IX-IX de la fig. 5.

La fig. 10 est une coupe suivant la ligne X-X de la fig. 5.

Dans ce qui suit, on décrit la partie gauche d'un siège mais évidemment la partie droite de ce siège est équipée du même dispositif.

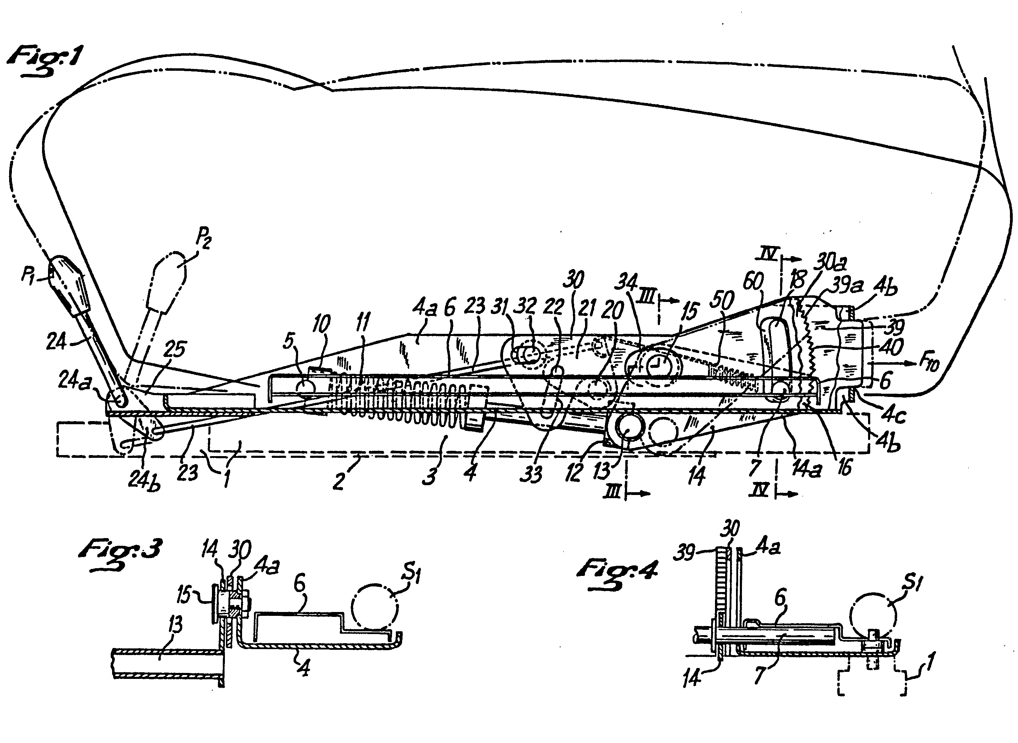

A la fig. 1, on a représenté une glissière de siège 1 dont on voit l'élément fixe 2 solidaire du plancher du véhicule et l'élément coulissant mobile 3. Sur le sommet de l'élément coulissant 3 est montée une pièce 4 ayant en section la forme d'un L dont la branche verticale 4a permet de fixer les différentes pièces constituant le dispositif de réglage en hauteur. La partie arrière 4b de la pièce en L est redressée verticalement et présente une fenêtre 4c dont le rôle sera expliqué plus loin. Un axe 5 est fixé sur la pièce 4 et sert de point d'articulation à un support 6 ayant en section sensiblement la forme d'un M, cette pièce support 6 étant solidaire, à sa partie arrière, d'un axe 7 sur lequel est fixé le siège S₁.

Comme on peut le voir aisément à la fig. 1, la pièce 4 en L maintient l'extrémité 10 d'un vérin à ressort 11 dont la tête mobile 12 est fixée sur un tube transversal 13 reliant chacune des pièces triangulaires 14. Ces dernières sont chacune articulées sur un axe 15 solidaire de chaque pièce 4 en L placée sur la partie supérieure des glissières 1. L'extrémité 14a de chaque pièce triangulaire 14 comporte une denture 16.

Il est important de signaler que les axes 7 solidaires des pièces 6 passent à travers une boutonnière courbe 8 percée dans chacune des pièces 4 en L.

Comme on le voit à la fig. 1, chaque pièce 4 en L porte sensiblement dans sa zone médiane un axe de rotation 20 sur lequel est montée une pièce 21 en triangle isocèle présentant en ergot 22 et reliée par une tringle 23 à un levier de manoeuvre 24 articulé sur un axe 24a solidaire d'une pièce 25 prolongeant la pièce 4 en L. L'axe 24a est solidaire d'un prolongement 24b sur lequel est attelée l'extrémité de la tringle 23. Finalement, une pièce 30 est disposée parallèlement à l'aile verticale 4a de la pièce 4 et présente une boutonnière 31 dans laquelle passe un axe 32 solidaire de l'aile 4a de la pièce 4. Une deuxième boutonnière 33 est percée dans la pièce 30 à travers laquelle passe l'ergot 22 de la pièce 21 en triangle isocèle. Finalement, une large boutonnière 34 est percée également dans la pièce 30 pour permettre le passage de l'axe 15. La pièce 30 est prolongée à sa partie arrière 30a par une pièce plate 38 sur laquelle est monté un secteur 39 présentant à sa partie avant 39a des dents disposées en arc de cercle 40. Ce secteur denté 39 passe à travers la fenêtre 4c de la partie redressée arrière 4b de la pièce 4. Les dents 40 sont destinées à coopérer avec la denture 16 de la pièce triangulaire 14. De plus, une ouverture 60 est prévue dans la pièce 30 pour le passage de l'axe 7.

Le dispositif fonctionne de la façon suivante.

En admettant que le siège S₁ occupe la position représentée à la fig. 1, si l'on décide de relever la partie arrière du siège, l'utilisateur fait pivoter le levier de manoeuvre 24 de la position P₁ à la position P₂ (voir fig. 1). Ceci a pour effet de tirer les tringles 23 vers l'avant et, de ce fait, de faire pivoter les pièces 21 en triangle isocèle de la position représentée à une position basse qui amène les ergots 22 en bas des deuxièmes boutonnières 33. Ceci s'effectue contre l'action de ressorts 50 attelés d'une part à chaque tringle 23 et d'autre part aux axes 7. Le mouvement ainsi donné aux pièces 21 en triangle isocèle provoque un mouvement vers l'arrière de chaque pièce 30 qui recule (flèche F₁₀) et, de ce fait, chaque secteur 39 portant les dents 40 recule également comme cela est visible à la fig. 1. Ainsi les dents 40 n'engrènent plus avec la denture 16 de la pièce triangulaire 14 qui est libérée, et le vérin ressort 11, en repoussant l'ensemble du fait que le ressort de ce vérin se détend, amène la pièce 14 vers le haut en inclinant en même temps l'élévation des axes 7 solidaires de l'arrière du siège P₁. Celui-ci se soulève et peut ainsi arriver à la position maximum représentée en traits mixtes, c'est-à-dire lorsque l'axe transversal 7 arrive en haut de chaque boutonnière courbe 18.

Toutes les positions intermédiaires entre ces positions extrêmes sont possibles. Le passager n'a donc pas eu d'efforts à faire puisque l'effort de rehaussement de la partie arrière du siège est effectué sous l'action du ressort de chaque vérin 11. Il suffit de relâcher le levier de manoeuvre 24 de la position P₂ à la position P₁ pour verrouiller l'ensemble sous l'effet des ressorts 50.

Il est à remarquer que la forme de la boutonnière 33 de la pièce 30 est étudiée pour assurer, sous l'action du mouvement de retour de la pièce en triangle isocèle 21 qui porte l'ergot 22, provoqué par les ressorts 50, une parfaite sécurité de crantage même en cas de sollicitations les plus violentes, telles que celles exigées par les dernières normes de sécurité automobile connue. De plus, il est possible d'intégrer ce dispositif de réglage partiellement dans la structure même du siège.

Le réglage en hauter arrière d'un siège obtenu par le présent dispositif peut être monté soit en option sur un siège existant donc non réglable, soit sur un siège étudié spécialement pour cette adaptation. On diminue donc ainsi le nombre de pièces. Mais le siège spécialement conçu peut ainsi être monté sans le dispositif monté en hauteur, par exemple siège de passager.

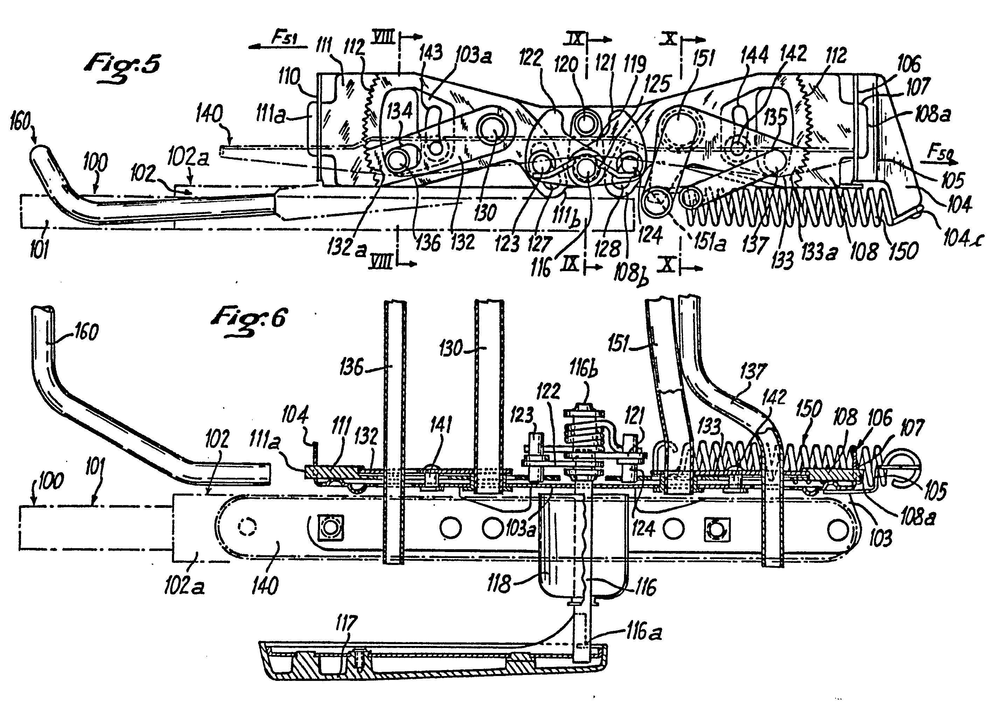

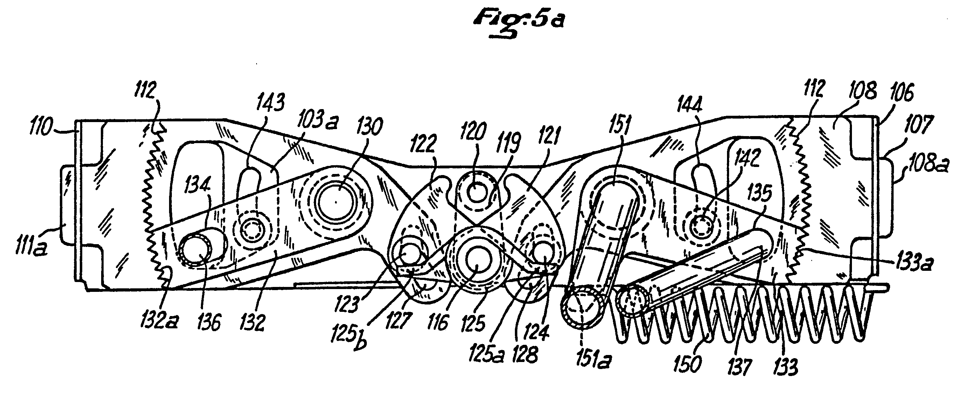

A la fig. 5 on a représenté la partie fixe 101 d'une glissière 100 de réglage longitudinal d'un siège d'automobile qui comporte un élément supérieur 102 coulissant par rapport à l'élément fixe 101 fixé sur le plancher du véhicule. La face supérieure 102a de l'élément coulissant 102 supporte une pièce 103 en L que l'on voit parfaitement à la fig. 7. L'aile verticale 103a de la pièce 103 porte sur sa partie avant un retour transversal 104 dont le rôle sera expliqué plus loin; de même la partie arrière de l'aile 103a supporte une pièce 105 conformée en S. Il est à signaler que la partie verticale 103a arrière de la pièce 103 se termine par un retour 106 percé d'une ouverture 107 dans laquelle est logée une pièce 108 présentant une queue 108a passant à travers l'ouverture 107. De même le retour 104 avant présente une ouverture 110 dans laquelle est logée la queue 111a d'une pièce 111. La face avant des pièces 108 et 111 présente une denture courbe 112 de même diamètre. Les deux dentures 112 présentent ainsi une symétrie parfaite.

En son centre l'aile 103a de la pièces 103 porte un palier 115 dans lequel repose un arbre 116 passant à travers un trou percé de l'aile 103a. Cet arbre 116 se termine à sa partie extérieure 116a par une poignée 117.

118 désigne le support de palier de l'arbre 116. Ce dernier porte à son extrémité 116b un bras 119 dont l'extrémité supérieure est munie d'un doigt 120 qui vient en butée sur deux cames 121 et 122, cames qui sont symétriques mais disposées l'une en face de l'autre comme cela est parfaitement représenté à la fig. 5.

La partie inférieure des cames 121 et 122 qui portent chacune un doigt 123, 124 et un ressort 125 en spirale appuie par ses extrémités 125a, 125b sous les doigts 123, 124 pour ramener les cames 121, 122 dans la position de verrouillage du dispositif. Les doigts 123, 124 assurent par le passage d'un point mort par un excellent verrouillage.

Comme le montrent les dessins, les pièces 108 et 111 sont percées, à leur partie arrière 108b, 111b, d'ouvertures arquées 127, 128 à travers lesquelles passent les doigts 123, 124 des cames 121, 122. De plus, deux axes 130, 151 servent de point d'articulation à des pièces 132, 133 qui sont dentées en 132a, 133a pour coopérer avec les dentures 112 courbes déjà mentionnées.

Ces pièces 132, 133 sont percées d'ouvertures 134, 135 dans lesquelles passent des axes 136, 137 fixés sur la pièce conformée 140 portant l'armature du siège S (fig. 8, 9, 10).

Pour assurer un bon guidage des pièces dentées 132, 133, il est prévu des tétons 141, 142 coulissant dans des ouvertures arquées 143, 144 percées dans la partie verticale de la pièce 103 en L.

Comme le montre la fig. 5, la pièce dentée 133 est soumise à l'action d'un ressort 150 qui tend à la soulever du fait que son effort s'exerce en un point 151a sur la pièce 133 qui est articulée sur un axe 151. Le ressort 150 est attelé, d'une part, à l'extrémité inférieure de la pièce 133 et, d'autre part, sur l'extrémité inférieure 104c de la pièce fixe 104 en L.

Le dispositif fonctionne de la façon suivante.

Lorsqu'on désire soulever la partie arrière du siège (voir fig. 5 à 10), on fait pivoter la poignée 117 en la soulevant de façon que le doigt 120 repousse la came 121 qui, en manoeuvrant le doigt 124 vers le bas, repousse la pièce 108 dans le sens de la flèche $F_{50}$ (fig. 5). De ce fait, la pièce dentée 133 n'est plus en contact avec les dents 112 de la pièce 108, le ressort 150 peut agir et, par l'intermédiaire de l'axe 137 qui est solidaire de la pièce 140 portant la partie arrière du siège comme expliqué plus haut, celui-ci se soulève. Lorsqu'on relâche la tension sur la poignée 117, la came 121 reprend sa position sous l'action de ressort 125 et, de ce fait, la pièce 108 reprend sa position. Les dents de la pièce 133 engrènent de nouveau avec les dents 112 de la pièce 108 en bloquant le siège dans la position choisie.

Si l'on manoeuvre la poignée 117 vers le bas, c'est-à-dire dans le sens contraire au sens précédent, la came 122 pivote et, par l'intermédiaire du doigt 123, repousse la pièce 111, les dents 112 ne sont plus en contact avec les dents 132a de la pièce 132. A ce moment, la partie avant du siège est libre puisque la pièce 111 a été repoussée dans le sens de la flèche $F_{51}$ (fig. 5). En effectuant un mouvement d'appui sur le dossier du siège, le passager peut soulever la partie avant de ce siège puisque celui-ci est solidaire de la pièce 140, elle-même solidaire de l'axe 135 dont la position est contrôlée par la pièce 132. On obtient ainsi un réglage en hauteur de la partie avant du siège.

Finalement, en relâchant la pression sur la poignée 117, les organes reprennent leur position habituelle puisque la came 122 est rappelée par le ressort 125 comme précédemment indiqué. Les dents 132a de la pièce 132 pénètrent de nouveau dans les dents 112 de la pièce 111.

Bien que cela n'ait rien à voir avec la présente invention, la référence 160 désigne la commande de réglage des glissières longitudinales 100.

L'ensemble sus-décrit permet donc un réglage aisé et rapide de l'assiette de l'assise d'un siège tant dans sa zone arrière que dans sa zone avant, tout en assurant un blocage très sûr dans une position choisie et ne pouvant pas être déclenchée par inadvertance puisque les doigts 123 et 124 commandant le désaccouplement des pièces dentées 108 et 111 bloquent en permanence ces derniers grâce à la forme étudiée des ouvertures arquées 127, 128 et à l'action du ressort 125.

Pour faciliter la compréhension de l'invention, on à décrit le fonctionnement du dispositif placé d'un seul côté du siège. On peut imaginer exactement le même dispositif placé de l'autre côté du siège, la commande de déverrouillage étant alors assurée par l'axe 116 prolongé de façon à traverser la largeur du siège et muni à son extrémité opposée d'un levier et d'un doigt analogues aux pièces 119, 120.

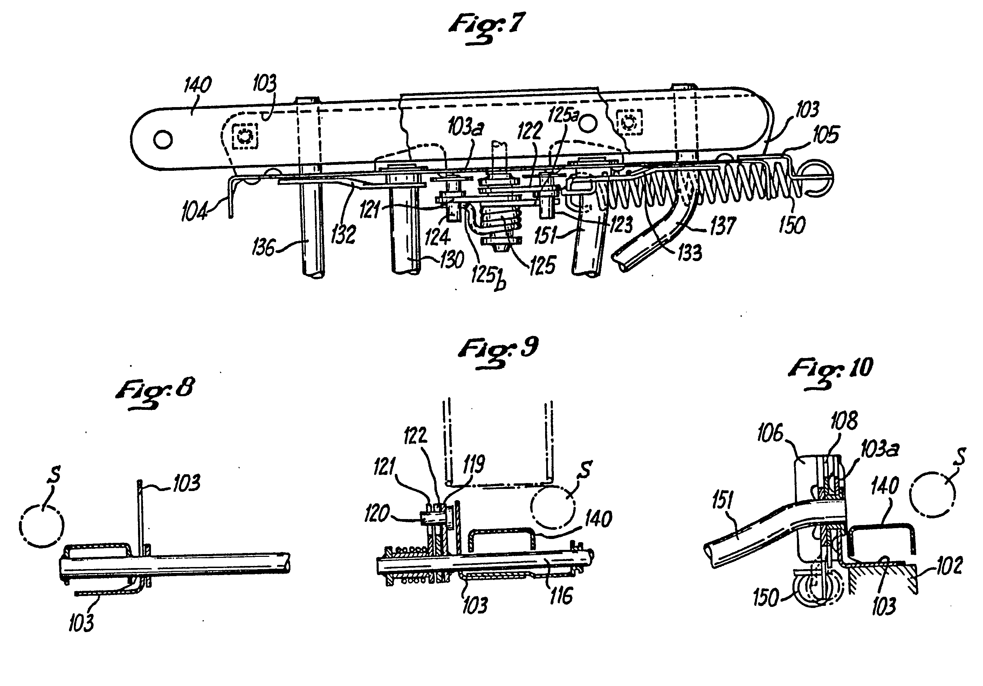

Cependant, pour des raisons de poids ou d'économie, on peut être amené, comme décrit dans l'invention en se référant à la fig. 9, à ne pas disposer de l'autre côté du siège des pièces crantées analogues aux pièces 108 et 111 et 132 et 133, mais seulement des leviers coopérant avec les tiges 136, 137, la transmission du mouvement s'effectuant au moyen des axes 130 et 151.

**Revendications**

1. Dispositif de réglage en hauteur de la partie arrière d'un siège de véhicule, comportant une pièce (4) en L qui est fixée sur la partie supérieure mobile de chaque glissière (1) du siège puis la partie verticale (4a) de cette pièce (4) en L sert de support à une pièce (30) portant un secteur arrière (39) présentant des dents (40) destinées à coopérer avec une pièce triangulaire (14) pivotante montée sur un axe (15), cette pièce triangulaire (14) étant munie à sa partie arrière d'une denture (16) engrenant avec les dents (40), caractérisé en ce que, lorsque la pièce (30), qui est montée coulissante, est tirée vers l'avant du siège tandis que, sous l'action d'une pièce en triangle isocèle (21) se déplaçant dans une boutonnière (33), la denture (16) se dégage des dents (40), un axe (7), placé à l'extrémité d'une pièce de support (6) portant l'armature du siège, peut se déplacer verticalement dans des botonnières de forme appropriée (18, 60) percées dans les pièces (4) et (30), ce mouvement étant provoqué d'une manière automatique d'une part, du fait du montage sur un axe (5) du support (6) et d'autre part par l'action d'un vérin (11) qui fait pivoter la pièce triangulaire (14) dont l'extrémité

7     **0 071 499**     8

arrière est solidaire de l'axe (7) prémentionné; le mouvement de retour de la pièce en triangle isocèle (21) qui porte un ergot (22) étant obtenu sous l'action d'un ressort de rappel (50).

2. Dispositif de réglage suivant la revendication 1, caractérisé en ce qu'un levier de commande (24) pivotant permet de transmettre un mouvement pivotant à la pièce en triangle isocèle (21) portant l'ergot (22) prémentionné, ce mouvement étant contrarié par le ressort de rappel (50) fixé par l'une de ses extrémités, d'une part, sur une tringle de transmission de mouvement (23) et, d'autre part, sur l'axe (7) porté par le support (6) sur lequel est fixée l'armature de siège.

3. Dispositif de réglage en hauteur de la partie avant et arrière d'un siège de véhicule dans lequel la partie supérieure (102) coulissante de chaque glissière (100) d'un siège comporte une pièce (103) en L maintenant, à ses deux extrémités, des pièces conformées (108, 111) à partir desquelles sont réglées en hauteur la partie arrière et la partie avant de l'assise puis des pièces (132, 133) pouvant pivoter légèrement sont terminées par des dentures (132a, 133a) coopérant avec les dentures (112) de pièces (108, 111) pour déterminer la hauteur de la partie arrière et avant de l'assise du siège et bloquer cette assise dans la position choisie, les pièces pivotantes (132, 133) étant soumises à l'action de cames (121, 122) commandées par une poignée (117) pouvant faire pivoter un arbre (116) portant à son extrémité libre un bras (119) muni d'un doigt (120) appuyant tour à tour sur l'une des cames (121, 122) tandis qu'au moins un ressort (125) tend à ramener les cames (121, 122) en position de repos, c'est-à-dire dans la position de blocage des pièces (132, 133) par engrènement des dents (132a, 133a) dans la denture (112) des pièces (108, 111) après passage par un point mort, dispositif caractérisé en ce que un levier (151a) coopérant avec la pièce pivotante (133) permet, sous l'action d'un ressort (150), le soulèvement automatique de la partie arrière de l'assise du siège.

4. Dispositif suivant la revendication 3, caractérisé en ce que l'armature du siège repose sur une pièce intermédiaire (140) solidaire d'une part d'un axe (136) coopérant avec la pièce pivotante (132) et, d'autre part, avec une tige (137), coopérant avec la pièce pivotante (133).

**Patentansprüche**

1. Vorrichtung zur Höhenverstellung des hinteren Bereiches eines Fahrzeugsitzes, bei der ein L-Stück (4) auf dem oberen beweglichen Bereich jeder Sitzgleitführung (1) befestigt ist, wobei der senkrechte Bereich (4a) dieses L-Stücks (4) als Stütze für einen Teil (30) dient, welcher einen rückwärtigen Bereich (39) aufweist, der Zähne (40) besitzt, welche mit einem Dreieckteil (14) zusammenarbeiten, der schwenkbar auf einer Achse (15) montiert ist, wobei dieser Dreieckteil (14) in seinem rückwärtigen Bereich mit einer Zahnung (16) versehen ist, die dann mit den Zähnen (40) kämmt, dadurch gekennzeichnet, dass, wenn der als Kulisse ausgebildete Teil (30) nach dem vorderen Bereich des Sitzes gezogen wird, während die Zahnung (16) unter der Wirkung eines als gleichschenkliges Dreieck ausgebildeten, sich in einem Langloch (33) verschiebenden Organs (21) ausser Eingriff mit den Zähnen (40) gelangt, eine am Endbereich eines Stützteils (6) angeordnete Achse (7), die den Aufbau des Sitzes trägt, in Langlöchern (18, 60) geeigneter Gestalt, welche in die Teile (4) und (30) eingearbeitet sind, senkrecht verschiebbar ist, wobei diese Bewegung automatisch einerseits durch die Befestigung auf einer Achse (5) des Supports (6) und andererseits durch die Wirkung einer Hubspindel (11) herbeigeführt wird, die den Dreieckteil (14) mit der mit seinem hinteren Bereich einstückigen Achse (7) schwenkt, und die Rückführbewegung des als gleichschenkliges Dreieck ausgebildeten Teils (21), der eine Klaue (22) trägt, unter der Einwirkung einer Rückstellfeder (50) erfolgt.

2. Vorrichtung nach Anspruch 1, dadurch gekennzeichnet, dass ein Betätigungs-Schwenkhebel (24) es gestattet, eine Schwenkbewegung an die dreieckig-gleichschenklige Platine (21) zu übermitteln, welche die Klaue (22) trägt, wobei dieser Bewegung durch die Rückholfeder (50) entgegengewirkt wird, die mit ihrem einen Ende an einer Bewegungsübertragungsstange (23) und andererseits an der Achse (7) des Supports (6) befestigt ist, auf dem der Aufbau des Sitzes befestigt ist.

3. Vorrichtung zur Höhenverstellung des vorderen und des hinteren Bereiches eines Fahrzeugsitzes, bei welcher der obere, bewegliche Teil (102) jeder Gleitschienen-Vorrichtung (100) eines Sitzes eine L-Schiene (103) umfasst und an ihren beiden Enden Elemente (108, 111) gleicher Form aufweist, von denen aus höhenlagenmässig der hintere und der vordere Bereich des Sitzkissens verstellbar sind, und leicht schwenkbare Stücke (132, 133) mit Zähnen (132a, 133a) enden, die mit Zähnen (112) von Stücken (108, 111) kämmen, zwecks Einstellung der Höhe des hinteren und vorderen Bereichs des Sitzkissens des Sitzes und Blockierung dieses Sitzkissens in der ausgewählten Stellung, wobei die schwenkbaren Stücke (132, 133) der Wirkung von Nocken (121, 122) ausgesetzt sind, die von einem Handgriff (117) betätigt werden, unter dessen Wirkung eine Welle (116) schwenken kann, die an ihrem freien Ende einen Arm (119) trägt, der einen Finger (120) besitzt, der abwechselnd auf einen der Nocken (121, 122) drückt, während zumindest eine Feder (125) auf die Nocken (121, 122) wirkt, um die sie in deren Ruhestellung, d.h. in die Blockierstellung der Stücke (132, 133) durch Eingriff der Zähne (132a, 133a) in die Zähne (112) der Stücke (108, 111) nach Durchlaufen eines Totpunkts, zurückzubringen, dadurch gekennzeichnet, dass ein mit dem schwenkbaren Stück (133) zusammenwirkender Hebel (151a) unter der Wirkung einer Feder (150) das automatische Anheben des hinteren Bereiches des Sitzkissens des Sitzes ermöglicht.

4. Vorrichtung nach Anspruch 3, dadurch gekennzeichnet, dass der Aufbau des Sitzes auf einem Zwischenstück (140) ruht, das einerseits mit einer Achse (136) einstückig ist, die mit dem schwenkbaren Stück (132) zusammenwirkt und andererseits mit einer Stange (137) einstückig ist, die mit dem schwenkbaren Stück (133) zusammenwirkt.

## Claims

1. Height adjustment device of the rear part of a vehicle seat, comprising a L-shaped part (4) which is fixed on the mobile upper part of each slide (1) of the seat, then the upright part (4a) of this L-shaped part (4) is used as a support for a part (30) bearing a rear sector (39) having teeth (40) provided to cooperate with a triangular part (14) pivotally mounted on an axis (15), this triangular part (14) being provided at its rear part with a toothing (16) in engagement with the teeth (40), characterized in that, when the part (30), which is slidingly mounted, is drawn toward the front of the seat while, under action of an isosceles triangular part (21) moving in a button hole (33), the toothing (16) frees from the teeth (40), a pin (7), placed at the end of a support piece (6) carrying the seat frame, can move vertically in button holes of a suitable shape (18, 60) pierced in the parts (4) and (30), this movement being caused on an automatic manner on the one hand, because of the mounting on a pin (5) of the support (6) and on the other hand by action of a jack (11) which pivots the triangular part (14) the rear end of which is fixed to the prementioned pin (7); the return movement of the isosceles triangular part (21) which carries a catch (22) being obtained under action of a return spring (50).

2. Adjustement device according to claim 1, characterized in that a pivoting control lever (24) enables to transmit a pivoting movement to the isosceles triangular part (21) bearing the prementioned catch, this movement being impeded by the return spring (50) fixed by one of its ends, on the one hand, on a movement transmission rod (23) and, on the other hand, on the pin (7) carried by the support (6) on which is secured the seat frame.

3. Height adjustement device of the front and rear part of a vehicle seat in which the upper sliding part (102) of each slide (100) of a seat comprises a L-shaped part (103) maintaining, at its two ends, shaped parts (108, 111) from which are height adjusted the seat part and the front part of the seating, then parts (132, 133) able to slightly pivot are terminated by toothings (132a, 133a) cooperating with the toothings (112) of parts (108, 111) for determinating the height of the rear and front part of the seat seating and locking this seating in the chosen portion, the pivoting parts (132, 133) being submitted to action of cams (121, 122) controlled by a handle (117) able to pivot a shaft (116) carrying at its free end an arm (119) provided with a finger (120) pushing, by turns, on one of the cams (121, 122) while at least one spring (125) tends to return the cams (121, 122) in their rest position, i.e. in the locking position of the parts (132, 133) by engagement of the teeth (132a, 133a) in the toothing (112) of the parts (108, 111) after passing a dead point, the device being characterized in that a lever (151a) cooperating with the pivoting part (133) enables, under action of a spring (150), the automatic raising of the rear part of the seat seating.

4. Device according to claim 3, characterized in that the seat frame lies on an intermediary part (140) fixed on the one hand to a pin (136) cooperating with the pivoting part (132) and, on the other hand, with a rod (137), cooperating with the pivoting part (133).

*Fig:1*

*Fig:3*

*Fig:4*

0 071 499

Fig.2

Fig.5

Fig.6

*Fig. 5a*

0 071 499

Fig.7

Fig.8

Fig.9

Fig.10